# EUROPEAN PATENT SPECIFICATION

(11) **EP 3 790 379 B1**
(45) Date of publication and mention of the grant of the patent: **19.06.2024**
(21) Application number: 19742999.6
(22) Date of filing: 09.05.2019
(51) Int. Cl.: A01G 9/24

(54) **HORTICULTURAL AND/OR AGRICULTURAL GREENHOUSE**
GEWÄCHSHAUS FÜR GARTENBAU UND/ODER LANDWIRTSCHAFT
SERRE HORTICOLE ET/OU AGRICOLE

(30) Priority: 09.05.2018 NL 2020907
(43) Date of publication of application: 17.03.2021
(73) Proprietor: Dalsem Beheer B.V., 2635 CG Den Hoorn (NL)
(72) Inventor: LANSU, Peter Eduard Maria, 2635 CG Den Hoorn (NL)
(74) Representative: van Trier, Norbertus Henricus Gerardus
(86) International application number: PCT/NL2019/050278
(87) International publication number: WO 2019/216768

(56) References cited:
- WO-A1-2013/023764
- WO-A2-2018/062988
- NL-C2- 1 028 445
- US-A- 4 064 648

## Description

### BACKGROUND

The invention relates to a horticultural and/or agricultural greenhouse for cultivating crops therein.

Such a horticultural and/or agricultural greenhouse is known from EP 2 941 952 A2, and WO 2018/062988 A2.

The known greenhouse from EP 2 941 952 A2 is provided close to the upper side with at least one horizontally suspended fabric screen which defines a cultivation space for cultivating crops therein under the fabric screen and a ridge space separated from the cultivation space. The fabric screen comprises at least one passage between the ridge space and the cultivation space. The greenhouse further comprises a ventilation system with air displacing means for displacing air in the cultivation space of the greenhouse. At least one of the air displacing means is situated close to the passage in the fabric screen and is configured to draw in and subsequently displace air from both the ridge space and the cultivation space. The ventilation system is arranged within the passage of the fabric screen and is connected to the fabric screen.

The further greenhouse known from WO 2018/062988 A2 is provided with a system of controllable screens that can divide the greenhouse interior in a crop area and a roof area above the crop area. The greenhouse further comprises at least one lamp device or an air flow system. At least one lamp device is arranged in vertical alignment with an opening of the controllable screens.

### SUMMARY OF THE INVENTION

A disadvantage of the known horticultural and/or agricultural greenhouse is that providing the passage in the fabric screen and providing the edges of the passage with proper reinforcements is difficult.

It is an object of the present invention to overcome or to ameliorate the disadvantages of the known greenhouse, or to provide an alternative greenhouse.

According to a first aspect, the invention provides a horticultural and/or agricultural greenhouse for cultivating crops therein, as defined in independent claim 1.

Because of the use of the ventilation device adapter according to the invention, the ventilation device, for example, can be secured to one of the transverse frames, such that the ventilation device at least is enabled to displace air between the roof space and the cultivating space. The screen of the greenhouse can be arranged between a transverse frame and the ventilation device adapter, or between two transverse frames with the ventilation device adapter being arranged at a side of the screen and substantially transverse to the two transverse frames. Because of the ventilation device adapter, it is no longer necessary to provide a passage within the fabric screen and/or to provide reinforcements at the passage edges. It, therefore, is easier to assemble the greenhouse, and in particular to install and to connect the fabric screen in comparison with the known greenhouse.

In an embodiment, the ventilation device adapter is configured for being secured to one of the transverse frames, wherein the ventilation device adapter extends over substantially the frame length and substantially parallel to the respective transverse frame, wherein the ventilation device adapter is provided between the respective transverse frame and the fabric screen. Since the ventilation device adapter advantageously extends over substantially the frame length of the transverse frame to which the ventilation device adapter is secured, and is provided between the transverse frame and the fabric screen, the fabric screen can be secured to the ventilation device adapter over substantially the whole width of the fabric screen.

In an embodiment, the ventilation device adapter is configured for being secured to two adjacent frames, wherein the ventilation device adapter extends substantially transverse to the two transverse frames. Advantageously, the fabric screen is divided into two screen portions, wherein a screen portion is provided at each side of the ventilation device adapter. This is advantageous as there is no need to provide a passage for the ventilation device within the fabric screen. Additionally, it can be advantageous that the width of the fabric screen is reduced because of the fabric screen being divided into two screen portions, which makes it easier to transport and/or to install the fabric screen.

According to the first aspect of the invention, the ventilation device adapter comprises a base beam extending substantially over the frame length of the respective transverse frame or between two adjacent transverse frames, wherein the base beam is provided with at least one passage and the ventilation device is in air communication with the at least one passage. Light, such as sun light, entering the greenhouse and being blocked by a ventilation device, as is the case in the known horticultural and/or agricultural greenhouse, results in a shadow in the cultivation space. Such shadow can be detrimental to the crops being placed within the cultivation space. Because of the base beam, the space occupied by the ventilation device adapter at the level of the fabric screen is limited to the width of the base beam. The amount of light being blocked by the ventilation device, therefore, is reduced.

In an embodiment the base beam is a U-shaped beam, which U-shaped beam has two parallel legs connected to each other by a center piece. In an embodiment thereof the at least one passage is provided in the center piece of the U-shaped beam. Preferably the ventilation device is in air communication with the at least one passage in order to draw air from the roof space. During use, air is drawn from the roof space and moved to the cultivation space, whereby air is drawn through the at least one passage in the center piece of the U-shaped beam. Because of the U-shape of the base beam, the base beam substantially functions as an air duct, such that air is sucked into the U-shaped beam over an area that is larger than the at least one passage in the center piece. As a result, air is removed from the roof space over a larger area, thereby improving the flow properties of air above the fabric screen.

In an embodiment the ventilation system comprises a suction tube having an air inlet, an air outlet, and an air channel extending between the air inlet and the air outlet, and the ventilation device comprises a fan connected to the suction tube at the air outlet thereof for drawing air into and through the suction tube, wherein the air inlet of the suction tube is positioned at or near the ventilation device adapter. In an embodiment thereof the suction tube is interconnected to the ventilation device adapter. An advantage of this embodiment is that the fan is positioned at a distance from and below the fabric screen by means of the suction tube. As the fan is located below the fabric screen and, therefore, closer to a bottom surface within the greenhouse, the shadow caused by the fan blocking light entering the greenhouse is kept to a minimum.

In an embodiment, the suction tube is connected to the base beam, preferably the center piece of the U-shaped beam, of the ventilation device adapter, such that the at least one passage and the air inlet of the suction tube are positioned adjacent to each other. According to this embodiment air is removed from the roof space, drawn into the suction tube directly and guided towards the fan of the ventilation device. This is advantageous, since air withdrawn from the roof space enters the cultivation space at the desired location, therewith preventing air leaks and undesired entering of air from the roof space into the cultivation space. Additionally, it can be advantageous that the base beam, preferably the U-shaped beam merges into the suction tube.

In an embodiment the suction tube is converging from the air inlet to the air outlet in a direction substantially parallel to the longitudinal axis of the ventilation device adapter. In an embodiment thereof the suction tube is converging from the air outlet to the air inlet in a direction substantially transverse to the longitudinal axis of the ventilation device adapter. Due to the suction tube being convergent, the area occupied by the suction tube at the air inlet near the fabric screen is smaller than the area occupied by the suction tube at the air outlet remote from, and in particular below, the fabric screen. As a result, the shadow due to the suction tube blocking light that has entered the greenhouse at the roof space and travelling towards the bottom surface of the greenhouse, is kept to a minimum.

In an embodiment, when the ventilation system comprises a suction tube having an air inlet, an air outlet and an air channel extending between the air inlet and the air outlet, and the ventilation device comprises a fan connected to the suction tube at the air outlet thereof for drawing air into and through the suction tube, wherein the air inlet of the suction tube is positioned at or near the ventilation device adapter, the fan comprises a fan housing connected to the suction tube at the air outlet thereof, a rotation shaft arranged rotatable within the fan housing, and a number of fan blades attached to the rotation shaft and extending radially from the rotation shaft. In an embodiment thereof the ventilation device comprises an air blender provided between the air outlet of the suction tube and the fan, wherein the air blender is configured for providing an air blend from air from the roof space and/or from the cultivating space to the fan. For example when the temperature and/or humidity of the air within the cultivation space is as desired, it may be sufficient to just circulate the air within the cultivation space without adding air from the roof space. Otherwise, it may be necessary to draw air from the roof space into the cultivation space in order to adapt the temperature and/or humidity of the air within the cultivation space. By providing the air blender between the suction tube and the fan, the amount of air to be drawn from the roof space and/or the cultivation space can be regulated.

In an embodiment, the air blender comprises a blender housing with a first air inlet for connection with the air outlet of the suction tube, a second air inlet for enabling air from the cultivating space to enter the air blender, an air outlet for enabling air to exit the air blender, and an air channel extending between the first air inlet, the second air inlet and the air outlet.

In an embodiment, the ventilation system is provided with a heat exchanger arranged for exchanging thermal energy with the air displaced within the cultivation space and/or between the roof space and the cultivation space. In a further embodiment, the fan is arranged at or near the air outlet of the air blender, and the heat exchanger is arranged at or near the first air inlet of the air blender, at or near the second air inlet of the air blender, at or near the air outlet of the air blender upstream of the fan, and/or downstream of the fan. An advantage of this embodiment is that the air within the greenhouse can be effectively dehumidified and the time period during which ventilation by means of the air vents is necessary becomes shorter, whereby it is possible to dose with a higher level of CO2 for a longer period of time. Additionally, it is possible to adjust the temperature within the greenhouse such that, for example, the temperature within the greenhouse during the night can be adjusted to a predetermined temperature.

In an embodiment, the ventilation device adapter comprises an additional beam arranged below and substantially parallel to the base beam, wherein the additional beam is configured for allowing a second screen to be secured thereto. An advantage of this embodiment is that an additional fabric screen can be provided for at least partially darkening and/or thermally shielding the greenhouse.

In an embodiment the greenhouse comprises multiple ventilation devices, and the ventilation device adapter is configured for receiving the multiple ventilation devices. An advantage of this embodiment is that it is possible to regulate air conditions within the cultivation space of the greenhouse evenly.

In an embodiment the greenhouse comprises multiple ventilation device adapters, each configured for receiving at least one ventilation device. This embodiment advantageously provides the possibility of regulating air conditions within the cultivation space of the greenhouse evenly.

According to a second aspect, the invention provides a ventilation system for use in a horticultural and/or agricultural greenhouse according to the first aspect of the invention.

According to a third aspect, the invention provides a ventilation device adapter for use in a horticultural and/or agricultural greenhouse according to the first aspect of the invention, or in a ventilation system according to the second aspect of the invention.

In a fourth aspect, the invention provides a method for climate control in a cultivating space in a horticultural and/or agricultural greenhouse, preferably a horticultural and/or agricultural greenhouse according to the first aspect of the invention, the method comprising the steps of: by the ventilation device, displacing air within the cultivation space; by the ventilation device, displacing air between the roof space and the cultivation space; or by the ventilation device, displacing air within the cultivation space and between the roof space and the cultivation space.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic overview of a part of an agricultural and/or horticultural greenhouse with multiple rows of support columns connected by transverse frames, and a ventilation system according to an embodiment of the invention;
Figures 2A-B show an enlarged view of one of the transverse frames and the ventilation system of figure 1, and a side view thereof, respectively;
Figures 3A-D show an isometric view, a front view, a side view and a top view of the ventilation system of figure 2, respectively;
Figure 4 shows a schematic overview of a part of an agricultural and/or horticultural greenhouse with multiple rows of support columns connected by transverse frames, and a ventilation system according to a further embodiment of the invention;
Figure 5 shows a schematic overview of a part of an agricultural and/or horticultural greenhouse with multiple rows of support columns connected by transverse frames, and a ventilation system having a heat exchanger according to a further embodiment of the invention; and
Figures 6A-6C show schematically alternative positions of the heat exchanger within the ventilation system of figure 5.

### DETAILED DESCRIPTION OF THE INVENTION

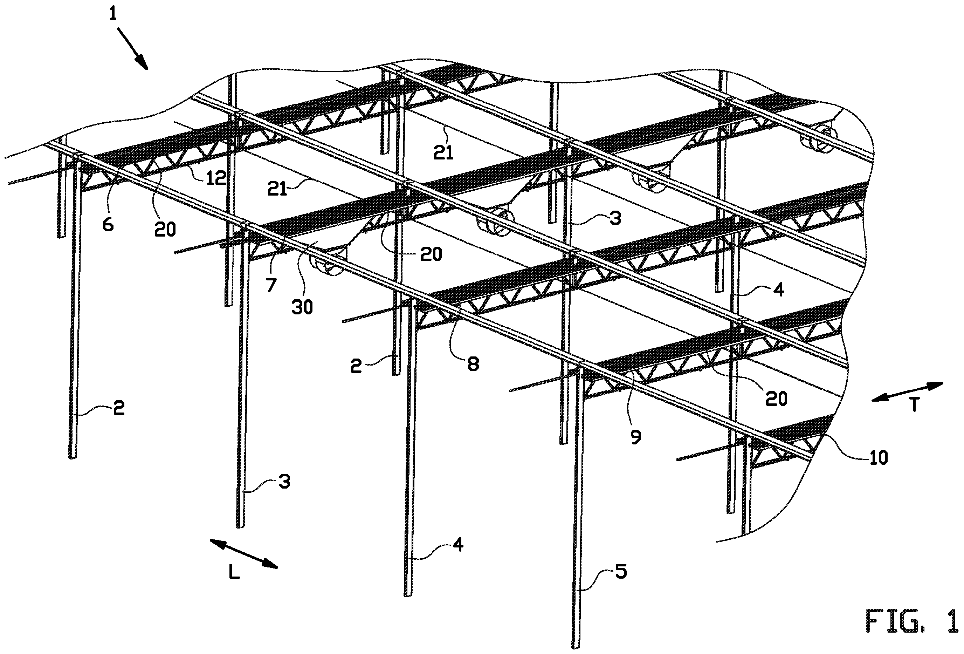

An agricultural and/or horticultural greenhouse 1 according to an embodiment of the invention is shown partially in figure 1. The partially shown greenhouse 1 is a Venlo type greenhouse, and comprises a number of identical metal columns 2-5, for example metal lattice columns, that are positioned spaced apart and in rows oriented in the longitudinal direction L of the greenhouse 1. The lattice columns 2-5 are connected by means of metal transverse frames 6-10 for forming a supporting structure for a non-shown roof.

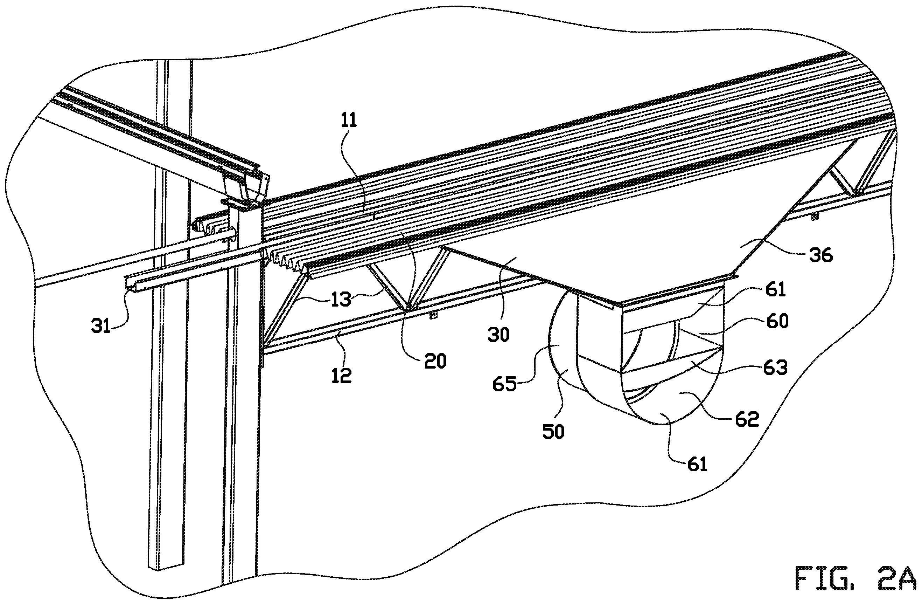

As shown in figure 2A each of the transverse frames 6-10 comprises a horizontal attachment section 11 and a horizontal bar 12 extending below the horizontal attachment section 11. The horizontal attachment section 11 and the horizontal bar 12 are interconnected by means of brace struts 13 extending between the horizontal attachment section 11 and the horizontal bar 12. Each of the metal columns 2-5 is configured for receiving the horizontal attachment section 11 at least partially at the upper end thereof.

A screen 20 is provided between two adjacent transverse frames 6-10, as shown in figures 1 and 2A-2B. The screen 20 is moveable between the shown open state, and a non-shown closed stated in which the screen 20 darkens and thermally shields the area between two adjacent transverse frames 6-10. Moreover, the screens 20 define a roof space, which is located above the screens 20, and a cultivating space, which is located below the screens 20, within the greenhouse 1. The greenhouse 1 further includes parallel guiding wires 21 extending in the longitudinal direction L of the greenhouse 1 and through the horizontal attachment section 11 of each transverse frame 6-10. For the sake of clarity, only a few guiding wires 21 are shown in the figures, while in practice a plurality of parallel guiding wires 21 is provided. Each of the screens 20 is attached to one or more of the guiding wires 21, such that each screen 20 is guided by a number of guiding wires 21 during moving between the open state and the closed state, and vice versa.

How the screens 20 may be incorporated into the horticultural and/or agricultural greenhouse 1, for example, is shown in Dutch patent publication NL 2001036.

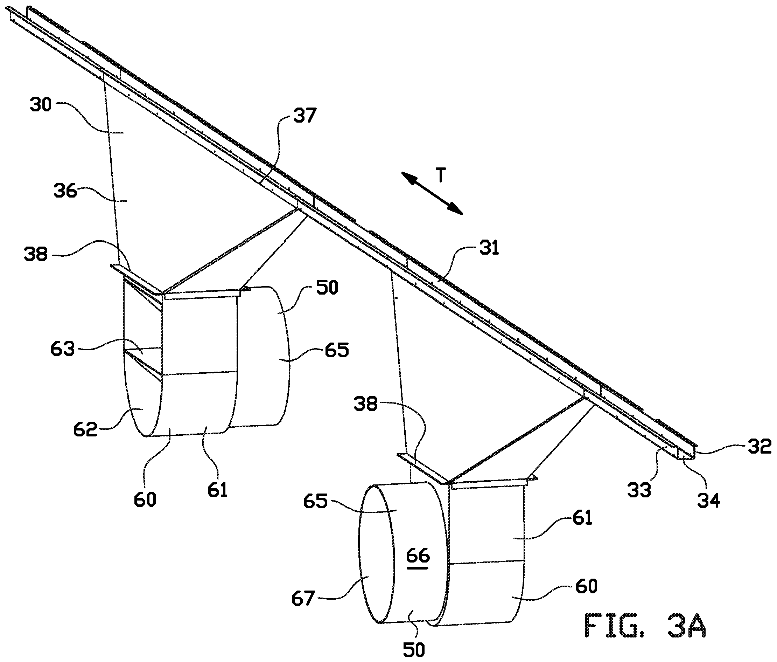

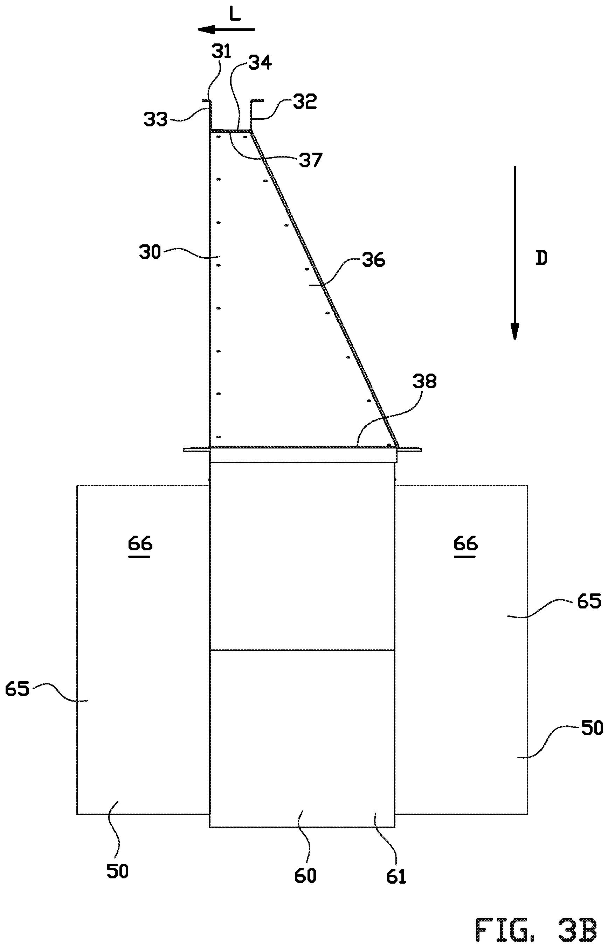

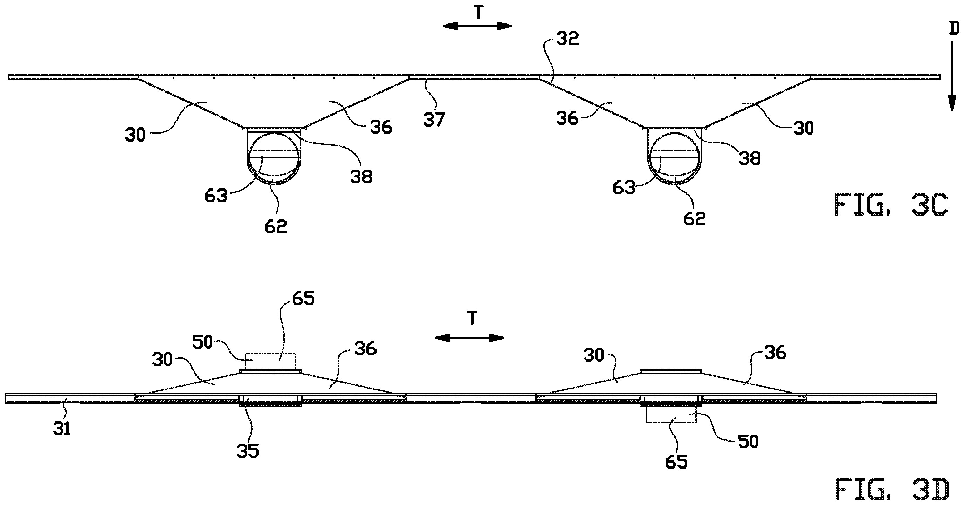

The horticultural and/or agricultural greenhouse 1 further comprises a ventilation system 30 for arranging multiple ventilation devices 50 at the greenhouse 1, in particular at one of the transverse frames 6-10 thereof. As shown in figures 3A and 3B the ventilation system 30 comprises a U-shaped base beam 31, which is part of a ventilation device adapter, extending over substantially the whole length of the respective transverse frame 6-10. The U-shaped base beam 31 has two parallel legs 32, 33 which are connected to each other by means of a center piece 34. As shown in figure 3D passages 35 are provided within the center piece 34, which passages 35 are configured for allowing air to pass through the center piece 34.

Further, two suction tubes 36 are arranged at the U-shaped base beam 31. Each of the suction tubes 36 has an air inlet 37, an air outlet 38 and an air channel extending between the air inlet 37 and the air outlet 38 and being arranged within the respective suction tube 36. The air inlet 37 of each of the suction tubes 36 is located adjacent to one of the passages 35 of the U-shaped base beam 31, such that air passing the respective passage 35 immediately enters the air inlet 37 and therewith the air channel of the respective suction tube 36.

Each of the of the suction tubes 36 converges in a first direction D from the air outlet 38 to the air inlet 37 and in a direction substantially parallel to the longitudinal direction L of the greenhouse 1, as shown in figure 3B. Additionally, each of the suction tubes 36 converges in the first direction D and in a direction substantially parallel to the longitudinal direction T of the respective transverse frame 6-10 being substantially perpendicular to the longitudinal direction L of the greenhouse 1, *i.e.* from the air inlet 37 to the air outlet 38.

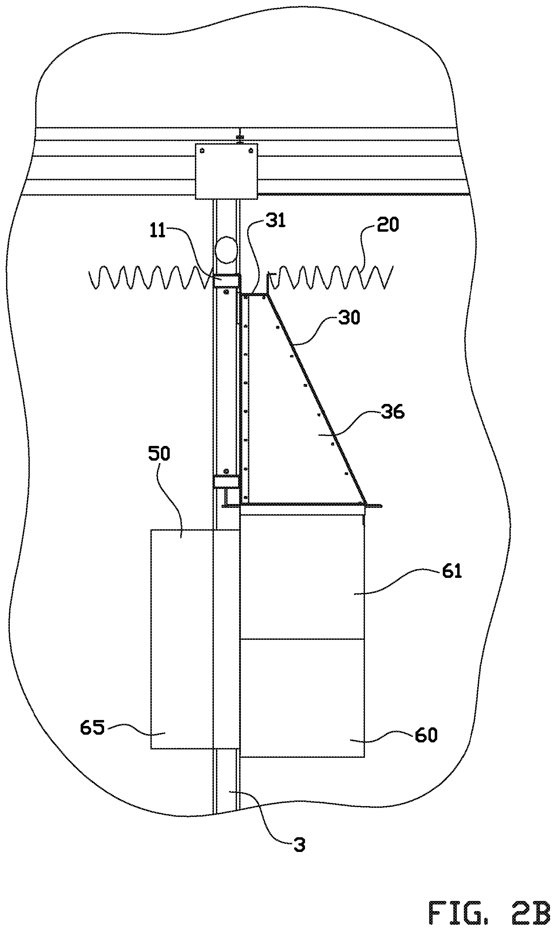

The U-shaped base beam 31, being part of the ventilation device adapter, is provided between the respective transverse frame 6-10 and the screen 20 suspended to the respective transverse frame 6-10, as shown in figures 2A and 2B. The screen 20 is attached to the U-shaped base beam 31 thereof.

As shown in figure 3A a ventilation device 50 is provided at the air outlet 38 of each of the suction tubes 36. The ventilation device 50 comprises an air blender 60 secured to the suction tube 36 at the air outlet 38 thereof. The air blender 60 comprises a blender housing 61 with a blending space 62 defined therein. The blending space 62 is in air communication with the air channel within the suction tube 36 and with the cultivating space of the greenhouse 1, such that air can be sucked into the blending space 62 from the roof space and the cultivating space. Blending flaps 63 are provided parallel to each other within the blending space 62, which blending flaps 63 are rotatable about a rotation axis substantially parallel to the longitudinal direction T of the respective transverse frame 6-10. By adjusting the orientation of the blending flaps 63, the amount of air entering the blending space 62 from the roof space and/or the cultivation space can be regulated.

The ventilation device 50 further comprises a fan 65 arranged downstream of the air blender 60 and in air communication with the blending space 62 thereof. The fan 65 comprises a substantially cylindrical fan housing 66 with a substantially circular fan space 67 defined therein. A non-shown rotation shaft and non-shown fan blades attached to the rotation shaft and extending radially therefrom are provided within the fan space 67. When the fan 65 is activated, air is drawn into the air blender 60 from the roof space and/or the cultivating space, which air is blended and blown into the cultivating space.

As shown in figure 3A the ventilation devices 50 can be arranged such that the adjacent ventilation device 50 blows air into the cultivation space of the greenhouse 1 in an opposite direction.

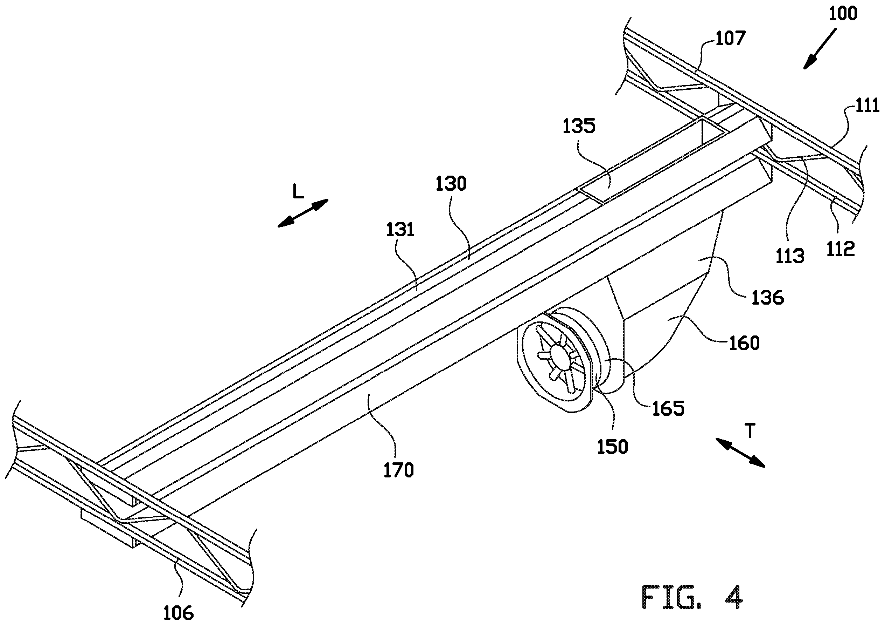

An agricultural and/or horticultural greenhouse 100 according to a further embodiment of the invention is partially shown in figure 4. The partially shown greenhouse 100 is a Venlo type greenhouse, and comprises a number of identical non-shown metal columns, for example metal lattice columns, that are positioned spaced apart and in rows oriented in the longitudinal direction L of the greenhouse 100. The lattice columns are connected by means of metal transverse frames 106-107 for forming a supporting structure for a non-shown roof. Each of the transverse frames 106-107 comprises a horizontal attachment section 111 and a horizontal bar 112 extending below the horizontal attachment section 111. The horizontal attachment section 111 and the horizontal bar 112 are interconnected by means of brace struts 113 extending between the horizontal attachment section 111 and the horizontal bar 112. The greenhouse 100 further comprises substantially the same features as the greenhouse 1 of figure 1, wherein in the present application is refrained from reintroducing corresponding features. Corresponding features are referred to with the same reference number increased by 100.

The greenhouse 100 differs from the greenhouse of figure 1 in that the horticultural and/or agricultural greenhouse 100 further comprises a ventilation system 130 for arranging a ventilation device 150 at the greenhouse 100 between two adjacent transverse frames 106-107 thereof. The ventilation system 130 comprises a base beam 131, which is part of a ventilation device adapter, extending between and substantially transverse to the two adjacent transverse frame 106-107.

Furthermore, the ventilation system 130 further comprises an additional beam 170 which is provided below and substantially parallel to the base beam 131. By means of the additional beam 170, it is possible to provide an additional non-shown fabric screen within the greenhouse 100.

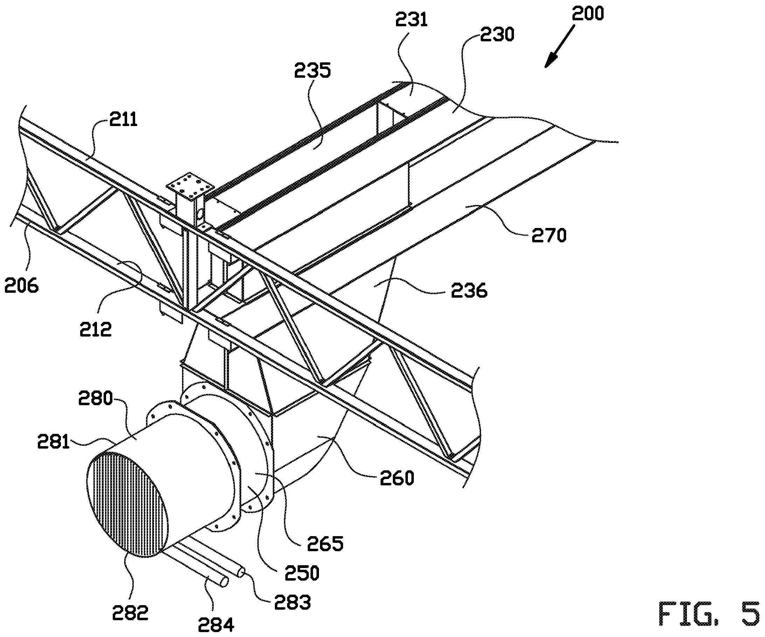

An agricultural and/or horticultural greenhouse 200 according to a further embodiment of the invention is partially shown in figure 5. The partially shown greenhouse 200 is a Venlo type greenhouse, and comprises a number of identical non-shown metal columns, for example metal lattice columns, that are positioned spaced apart and in rows oriented in the longitudinal direction L of the greenhouse 200. The lattice columns are connected by means of metal transverse frames 206 for forming a supporting structure for a non-shown roof. The greenhouse 200 further comprises substantially the same features as the greenhouse 100 of figure 4, wherein in the present application is refrained from reintroducing corresponding features. Corresponding features are referred to with the same reference number increased by 100.

The greenhouse 100 differs from the greenhouse of figure 4 in that the horticultural and/or agricultural greenhouse 200 further comprises a heat exchanger 280 arranged downstream of the fan 265. The heat exchanger 280 comprises a heat exchanger body 281 having an fluid channel defined therein, a fluid inlet for receiving air from the fan 265 and in fluid communication with the fluid channel, and a fluid outlet 282 in fluid communication with the fluid channel and provided for enabling air to exit the heat exchanger 280. The heat exchanger 280 further comprises a heat exchanging medium feed line 283 for feeding a heat exchanging medium to the heat exchanger body 281, and a heat exchanging medium discharge line 284 for discharging heated or cooled heat exchanging medium from the heat exchanger body 281.

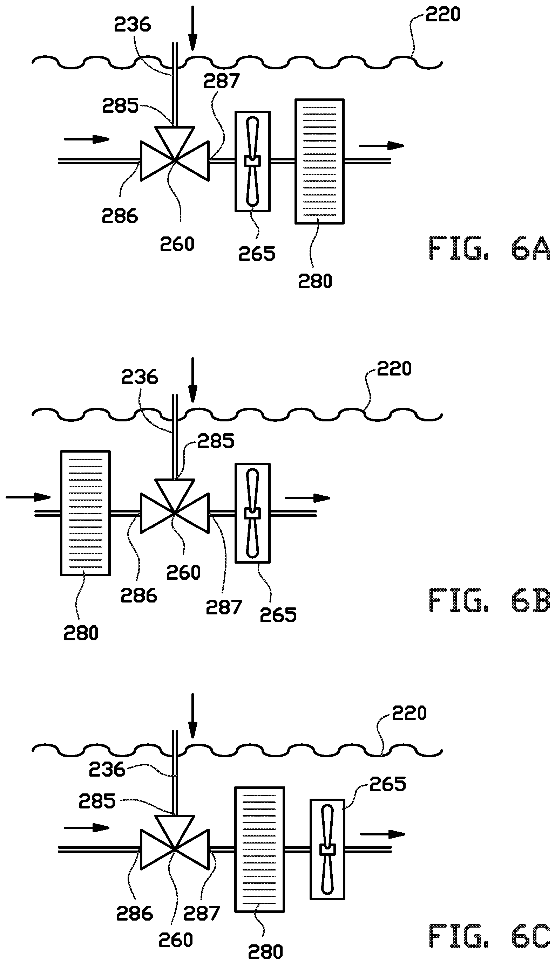

Figures 6A-6C schematically show alternative positions of the heat exchanger 280 within the ventilation system 230 of figure 5.

As schematically shown in figure 6A, the air blender 260 comprises a blender housing with a first air inlet 285 for connection with the air outlet of the suction tube 236, a second air inlet 286 for enabling air from the cultivating space to enter the air blender 260 via the suction channel 236, an air outlet 281 for enabling air to exit the air blender 260, and an air channel extending between the first air inlet 285, the second air inlet 286 and the air outlet 281. The air channel is schematically indicated as a control valve, since the amount of air from the roof space and/or the amount of air from the cultivating space drawn into the air blender 260 are controlled within the air channel. As shown in figure 6A, the heat exchanger 280 is arranged downstream of the fan 265. This position of the heat exchanger 280 corresponds to the position shown in figure 5. As a result, thermal energy can be exchanged with a mixture of air from the roof space and air from the cultivating space, with only air from the roof space, or with only air from the cultivating space.

Figure 6B schematically shows that the heat exchanger 280 can be arranged at or near the second air inlet 286 of the air blender 260, *i.e.* upstream of the second air inlet 286 of the air blender 260. In this position, the heat exchanger 280 is enabled to cool or heat air coming from the cultivating space only.

Figure 6C schematically shows that the heat exchanger 280 can be arranged at or near the air outlet 287 of the air blender 260, *i.e.* upstream of the fan 265 of the ventilation system 230. Therefore, air is drawn from the air blender 260 through the heat exchanger 280 by means of the fan 265.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In particular, it will be apparent to one skilled in the art that multiple ventilation device adapters can be provided within a horticultural and/or agricultural greenhouse. In that case, the ventilation device adapters are provided at a distance from each other in the longitudinal direction of the greenhouse. The scope of the invention is limited by the appended claims.

## Claims

1. Horticultural and/or agricultural greenhouse (1, 100, 200) for cultivating crops therein, comprising:
multiple rows of support columns (2-5) connected by transverse frames (6-10, 106-107, 206) for forming a roof support construction, each of the transverse frames (6-10, 106-107, 206) having a frame length;
a substantially horizontal fabric screen (20) for at least partially darkening and/or thermally shielding the greenhouse (1, 100, 200), wherein the fabric screen (20) is suspended between adjacent transverse frames (6-10, 106-107, 206) and divides the greenhouse (1, 100, 200) in a cultivating space below the fabric screen (20) and a roof space above the fabric screen (20); and
a ventilation system (30, 130, 230) with a ventilation device (50, 150, 250) for displacing air within the cultivation space and/or between the roof space and the cultivation space,
**characterized in that**, the ventilation system (30, 130, 230) further comprises a ventilation device adapter having a longitudinal axis and configured for receiving the ventilation device (50, 150, 250) and for being secured to one or more of the transverse frames (6-10, 106-107, 206) wherein the ventilation device adapter comprises a base beam (31, 131, 231) extending substantially over the frame length of the respective transverse frame (6-10, 106-107, 206) or between two adjacent transverse frames (6-10, 106-107, 206), wherein the base beam (31, 131, 231) is provided with at least one passage (35, 135, 235) and the ventilation device (50, 150, 250) is in air communication with the at least one passage (35, 135, 235).

2. Horticultural and/or agricultural greenhouse according to claim 1, wherein the ventilation device adapter is configured for being secured to one of the transverse frames (6-10, 106-107, 206), wherein the ventilation device adapter extends over substantially the frame length and substantially parallel to the respective transverse frame (6-10, 106-107, 206), wherein the ventilation device adapter is provided between the respective transverse frame (6-10, 106-107, 206) and the fabric screen (20).

3. Horticultural and/or agricultural greenhouse according to claim 1, wherein the ventilation device adapter is configured for being secured to two adjacent transverse frames (6-10, 106-107, 206), wherein the ventilation device adapter extends substantially transverse to the two transverse frames (6-10, 106-107, 206).

4. Horticultural and/or agricultural greenhouse according to claim 1, wherein the base beam (31, 131, 231) is a U-shaped beam, which U-shaped beam (31, 131, 231) has two parallel legs (32, 33) connected to each other by a center piece (34), preferably wherein the at least one passage (35, 135, 235) is provided in the center piece (34) of the U-shaped beam (31, 131, 231), preferably wherein the ventilation device (50, 150, 250) is in air communication with the at least one passage (35, 135, 235) in order to draw air from the roof space.

5. Horticultural and/or agricultural greenhouse according to any one of the preceding claims, wherein the ventilation system (30, 130, 230) comprises a suction tube (36, 136, 236) having an air inlet (37), an air outlet (38), and an air channel extending between the air inlet (37) and the air outlet (38), and wherein the ventilation device (50, 150, 250) comprises a fan (65, 165, 265) connected to the suction tube (36, 136, 236) at the air outlet (38) thereof for drawing air into and through the suction tube (36, 136, 236), wherein the air inlet (37) of the suction tube (36, 136, 236) is positioned at or near the ventilation device adapter.

6. Horticultural and/or agricultural greenhouse according to claim 5, wherein the suction tube (36, 136, 236) is interconnected to the ventilation device adapter, preferably wherein the suction tube (36, 136, 236) is connected to the base beam (31, 131, 231), preferably the center piece (34) of the U-shaped beam (31, 131, 231), of the ventilation device adapter, such that the at least one passage (35, 135, 235) and the air inlet (37) of the suction tube (36, 136, 236) are positioned adjacent to each other.

7. Horticultural and/or agricultural greenhouse according to any one of the claims 5-6, wherein the suction tube (36, 136, 236) is converging from the air inlet (37) to the air outlet (38) in a direction substantially parallel to the longitudinal axis of the ventilation device adapter, and/or
wherein the suction tube (36, 136, 236) is converging from the air outlet (38) to the air inlet (37) in a direction substantially transverse to the longitudinal axis of the ventilation device adapter.

8. Horticultural and/or agricultural greenhouse according to any one of the preceding claims, when dependent on claim 5, wherein the fan (65, 165, 265) comprises a fan housing (66) connected to the suction tube (36, 136, 236) at the air outlet (38) thereof, a rotation shaft arranged rotatable within the fan housing (66), and a number of fan blades attached to the rotation shaft and extending radially from the rotation shaft, preferably wherein the ventilation device (50, 150, 250) comprises an air blender (60, 160, 260) provided between the air outlet (38) of the suction tube (36, 136, 236) and the fan (65, 165, 265), wherein the air blender (60, 160, 260) is configured for providing an air blend from air from the roof space and/or from the cultivating space to the fan (65, 165, 265), preferably wherein the air blender (260) comprises a blender housing with a first air inlet (285) for connection with the air outlet of the suction tube (236), a second air inlet (286) for enabling air from the cultivating space to enter the air blender (260), an air outlet (281) for enabling air to exit the air blender (260), and an air channel extending between the first air inlet (285), the second air inlet (286) and the air outlet (281) .

9. Horticultural and/or agricultural greenhouse according to any one of the preceding claims, wherein the ventilation system (230) is provided with a heat exchanger (280) arranged for exchanging thermal energy with the air displaced within the cultivation space and/or between the roof space and the cultivation space.

10. Horticultural and/or agricultural greenhouse according to claims 8 and 9, wherein the fan (265) is arranged at or near the air outlet (287) of the air blender (260), and the heat exchanger (280) is arranged at or near the first air inlet (285) of the air blender (260), at or near the second air inlet (286) of the air blender (260), at or near the air outlet (281) of the air blender (260) upstream of the fan (265), and/or downstream of the fan (265) .

11. Horticultural and/or agricultural greenhouse according to any one of the preceding claims, wherein the ventilation device adapter comprises an additional beam (170, 270) arranged below and substantially parallel to the base beam (131, 231), wherein the additional beam (170, 270) is configured for allowing a second screen to be secured thereto.

12. Horticultural and/or agricultural greenhouse according to any one of the preceding claims, wherein the greenhouse (1, 100, 200) comprises multiple ventilation devices (50, 150, 250), and wherein the ventilation device adapter is configured for receiving the multiple ventilation devices (50, 150, 250), and/or
wherein the greenhouse (1, 100, 200) comprises multiple ventilation device adapters, each configured for receiving at least one ventilation device (50, 150, 250).

13. Ventilation system for use as the ventilation system in the horticultural and/or agricultural greenhouse according to any one of the preceding claims.

14. Ventilation device adapter for use as the ventilation device adapter in the horticultural and/or agricultural greenhouse according to any one of the claims 1 to 12, or for use as the ventilation device adapter in the ventilation system according to claim 13.

15. Method for climate control in a cultivating space in a horticultural and/or agricultural greenhouse, preferably a horticultural and/or agricultural greenhouse according to any one of the claims 1 to 12, the method comprising the steps of: by the ventilation device (50, 150, 250), displacing air within the cultivation space; by the ventilation device (50, 150, 250), displacing air between the roof space and the cultivation space; or by the ventilation device (50, 150, 250), displacing air within the cultivation space and between the roof space and the cultivation space.

## Patentansprüche

1. Garten- und/oder landwirtschaftliches Gewächshaus (1, 100, 200) zum Kultivieren von Pflanzen darin, aufweisend:
mehrere Reihen von Stützsäulen (2-5), die durch quer verlaufende Rahmen (6-10, 106-107, 206) zum Bilden einer Dachstützkonstruktion verbunden sind, wobei jeder der quer verlaufenden Rahmen (6-10, 106-107, 206) eine Rahmenlänge aufweist;
einen im Wesentlichen horizontalen Gewebeschirm (20) zum zumindest teilweisen Verdunkeln und/oder thermischen Abschirmen des Gewächshauses (1, 100, 200), wobei der Gewebeschirm (20) zwischen benachbarten quer verlaufenden Rahmen (6-10, 106-107, 206) aufgehängt ist und das Gewächshaus (1, 100, 200) in einen Kultivierungsraum unterhalb des Gewebeschirms (20) und einen Dachraum oberhalb des Gewebeschirms (20) unterteilt; und
ein Belüftungssystem (30, 130, 230) mit einer Belüftungsvorrichtung (50, 150, 250) zum Verdrängen von Luft innerhalb des Kultivierungsraums und/oder zwischen dem Dachraum und dem Kultivierungsraum,
**dadurch gekennzeichnet, dass**, das Belüftungssystem (30, 130, 230) weiterhin einen Belüftungsvorrichtungsadapter aufweist, der eine Längsachse aufweist und dazu ausgebildet ist, die Belüftungsvorrichtung (50, 150, 250) aufzunehmen und an einem oder mehreren der quer verlaufenden Rahmen (6-10, 106-107, 206) gesichert zu werden, wobei der Belüftungsvorrichtungsadapter einen Grundträger (31, 131, 231) aufweist, der sich im Wesentlichen über die Rahmenlänge des jeweiligen quer verlaufenden Rahmens (6-10, 106-107, 206) oder zwischen zwei benachbarten quer verlaufenden Rahmen (6-10, 106-107, 206) erstreckt, wobei der Grundträger (31, 131, 231) mit zumindest einem Durchgang (35, 135, 235) versehen ist und die Belüftungsvorrichtung (50, 150, 250) in Luftkommunikation mit dem zumindest einen Durchgang (35, 135, 235) steht.

2. Garten- und/oder landwirtschaftliches Gewächshaus nach Anspruch 1, wobei der Belüftungsvorrichtungsadapter dazu ausgebildet ist, an einem der quer verlaufenden Rahmen (6-10, 106-107, 206) gesichert zu werden, wobei der Belüftungsvorrichtungsadapter sich im Wesentlichen über die Rahmenlänge und im Wesentlichen parallel zu dem jeweiligen quer verlaufenden Rahmen (6-10, 106-107, 206) erstreckt, wobei der Belüftungsvorrichtungsadapter zwischen dem jeweiligen quer verlaufenden Rahmen (6-10, 106-107, 206) und dem Gewebeschirm (20) vorgesehen ist.

3. Garten- und/oder landwirtschaftliches Gewächshaus nach Anspruch 1, wobei der Belüftungsvorrichtungsadapter dazu ausgebildet ist, an zwei benachbarten quer verlaufenden Rahmen (6-10, 106-107, 206) gesichert zu werden, wobei der Belüftungsvorrichtungsadapter sich im Wesentlichen quer zu den zwei quer verlaufenden Rahmen (6-10, 106-107, 206) erstreckt.

4. Garten- und/oder landwirtschaftliches Gewächshaus nach Anspruch 1, wobei der Grundträger (31, 131, 231) ein U-förmiger Träger ist, welcher U-förmige Träger (31, 131, 231) zwei parallele Schenkel (32, 33) aufweist, die durch ein Mittelstück (34), miteinander verbunden sind, vorzugsweise wobei der zumindest eine Durchgang (35, 135, 235) in dem Mittelstück (34) des U-förmigen Trägers (31, 131, 231) vorgesehen ist, vorzugsweise wobei die Belüftungsvorrichtung (50, 150, 250) in Luftkommunikation mit dem zumindest einen Durchgang (35, 135, 235) steht, um Luft aus dem Dachraum anzusaugen.

5. Garten- und/oder landwirtschaftliches Gewächshaus nach irgendeinem der vorhergehenden Ansprüche, wobei das Belüftungssystem (30, 130, 230) ein Saugrohr (36, 136, 236) aufweist, das einen Lufteinlass (37), einen Luftauslass (38) und einen Luftkanal aufweist, der sich zwischen dem Lufteinlass (37) und dem Luftauslass (38) erstreckt, und wobei die Belüftungsvorrichtung (50, 150, 250) ein Gebläse (65, 165, 265) aufweist, das mit dem Saugrohr (36, 136, 236) an dem Luftauslass (38) desselben verbunden ist, um Luft in und durch das Saugrohr (36, 136, 236) zu saugen, wobei der Lufteinlass (37) des Saugrohres (36, 136, 236) an oder nahe bei dem Belüftungsvorrichtungsadapter positioniert ist.

6. Garten- und/oder landwirtschaftliches Gewächshaus nach Anspruch 5, wobei das Saugrohr (36, 136, 236) mit dem Belüftungsvorrichtungsadapter verbunden ist, vorzugsweise wobei das Saugrohr (36, 136, 236) mit dem Grundträger (31, 131, 231), vorzugsweise dem Mittelstück (34) des U-förmigen Trägers (31, 131, 231) des Belüftungsvorrichtungsadapters verbunden ist, derart, dass der zumindest eine Durchgang (35, 135, 235) und der Lufteinlass (37) des Saugrohres (36, 136, 236) benachbart zueinander positioniert sind.

7. Garten- und/oder landwirtschaftliches Gewächshaus nach irgendeinem der Ansprüche 5-6, wobei das Saugrohr (36, 136, 236) von dem Lufteinlass (37) zu dem Luftauslass (38) in einer zu der Längsachse des Belüftungsvorrichtungsadapters im Wesentlichen parallelen Richtung konvergiert, und/oder
wobei das Saugrohr (36, 136, 236) von dem Luftauslass (38) zu dem Lufteinlass (37) in einer zu der Längsachse des Belüftungsvorrichtungsadapters im Wesentlichen querverlaufenden Richtung konvergiert.

8. Garten- und/oder landwirtschaftliches Gewächshaus nach irgendeinem der vorhergehenden Ansprüche, wenn von Anspruch 5 abhängig, wobei das Gebläse (65, 165, 265) ein Gebläsegehäuse (66), das mit dem Saugrohr (36, 136, 236) an dem Luftauslass (38) desselben verbunden ist, eine Drehwelle, die drehbar innerhalb des Gebläsegehäuses (66) angeordnet ist, und eine Anzahl von Gebläseflügeln aufweist, die an der Drehwelle befestigt sind und sich radial von der Drehwelle erstrecken, vorzugsweise wobei die Belüftungsvorrichtung (50, 150, 250) einen Luftmischer (60, 160, 260) aufweist, der zwischen dem Luftauslass (38) des Saugrohres (36, 136, 236) und dem Gebläse (65, 165, 265) vorgesehen ist, wobei der Luftmischer (60, 160, 260) dazu ausgebildet ist, eine Luftmischung aus Luft aus dem Dachraum und/oder aus dem Kultivierungsraum dem Gebläse (65, 165, 265) bereitzustellen, vorzugsweise wobei der Luftmischer (260) ein Mischergehäuse mit einem ersten Lufteinlass (285) zur Verbindung mit dem Luftauslass des Saugrohres (236), einen zweiten Lufteinlass (286), damit Luft aus dem Kultivierungsraum in den Luftmischer (260) eintreten kann, einen Luftauslass (281), damit Luft aus dem Luftmischer (260) austreten kann, und einen Luftkanal aufweist, der sich zwischen dem ersten Lufteinlass (285), dem zweiten Lufteinlass (286) und dem Luftauslass (281) erstreckt.

9. Garten- und/oder landwirtschaftliches Gewächshaus nach irgendeinem der vorhergehenden Ansprüche, wobei das Belüftungssystem (230) mit einem Wärmeaustauscher (280) versehen ist, der zum Austauschen von Wärmeenergie mit der innerhalb des Kultivierungsraums und/oder zwischen dem Dachraum und dem Kultivierungsraum verdrängten Luft angeordnet ist.

10. Garten- und/oder landwirtschaftliches Gewächshaus nach den Ansprüchen 8 und 9, wobei das Gebläse (265) an oder nahe bei dem Luftauslass (287) des Luftmischers (260) angeordnet ist, und der Wärmeaustauscher (280) an oder nahe bei dem ersten Lufteinlass (285) des Luftmischers (260), an oder nahe bei dem zweiten Lufteinlass (286) des Luftmischers (260), an oder nahe bei dem Luftauslass (281) des Luftmischers (260), stromaufwärts des Gebläses (265), und/oder stromabwärts des Gebläses (265) angeordnet ist.

11. Garten- und/oder landwirtschaftliches Gewächshaus nach irgendeinem der vorhergehenden Ansprüche, wobei der Belüftungsvorrichtungsadapter einen zusätzlichen Träger (170, 270) aufweist, der unterhalb des und im Wesentlichen parallel zu dem Grundträger (131, 231) angeordnet ist, wobei der zusätzliche Träger (170, 270) dazu ausgebildet ist, dass ein zweiter Schirm daran gesichert werden kann.

12. Garten- und/oder landwirtschaftliches Gewächshaus nach irgendeinem der vorhergehenden Ansprüche, wobei das Gewächshaus (1, 100, 200) mehrere Belüftungsvorrichtungen (50, 150, 250) aufweist, und wobei der Belüftungsvorrichtungsadapter dazu ausgebildet ist, die mehreren Belüftungsvorrichtungen (50, 150, 250) aufzunehmen, und/oder
wobei das Gewächshaus (1, 100, 200) mehrere Belüftungsvorrichtungsadapter aufweist, wobei jeder dazu ausgebildet ist, zumindest eine Belüftungsvorrichtung (50, 150, 250) aufzunehmen.

13. Belüftungssystem zur Verwendung als das Belüftungssystem in dem Garten- und/oder landwirtschaftlichen Gewächshaus nach irgendeinem der vorhergehenden Ansprüche.

14. Belüftungsvorrichtungsadapter zur Verwendung als der Belüftungsvorrichtungsadapter in dem Garten- und/oder landwirtschaftlichen Gewächshaus nach irgendeinem der Ansprüche 1 bis 12, oder zur Verwendung als der Belüftungsvorrichtungsadapter in dem Belüftungssystem nach Anspruch 13.

15. Verfahren zur Klimasteuerung in einem Kultivierungsraum in einem Garten- und/oder landwirtschaftlichen Gewächshaus, vorzugsweise einem Garten- und/oder landwirtschaftlichen Gewächshaus nach irgendeinem der Ansprüche 1 bis 12, wobei das Verfahren die Schritte aufweist: Verdrängen mittels der Belüftungsvorrichtung (50, 150, 250) von Luft innerhalb des Kultivierungsraums; Verdrängen mittels der Belüftungsvorrichtung (50, 150, 250) von Luft zwischen dem Dachraum und dem Kultivierungsraum; oder Verdrängen mittels der Belüftungsvorrichtung (50, 150, 250) von Luft innerhalb des Kultivierungsraums und zwischen dem Dachraum und dem Kultivierungsraum.

## Revendications

1. Serre horticole et/ou agricole (1, 100, 200) pour y cultiver des plantes, comprenant :
plusieurs rangées de colonnes de support (2-5) reliées par des cadres transversaux (6-10, 106-107, 206) pour former une construction support de toit, chacun des cadres transversaux (6-10, 106-107, 206) ayant une longueur de cadre ;
un écran de toile (20) substantiellement horizontal pour obscurcir au moins partiellement et/ou protéger thermiquement la serre (1, 100, 200), dans laquelle l'écran de toile (20) est suspendu entre des cadres transversaux adjacents (6-10, 106- 107, 206) et divise la serre (1, 100, 200) en un espace de culture au-dessous de l'écran de toile (20) et un espace de toit au-dessus de l'écran de toile (20); et
un système de ventilation (30, 130, 230) ayant un dispositif de ventilation (50, 150, 250) pour déplacer de l'air à l'intérieur de l'espace de culture et/ou entre l'espace de toit et l'espace de culture,
**caractérisée en ce que** le système de ventilation (30, 130, 230) comprend en outre un adaptateur de dispositif de ventilation ayant un axe longitudinal et configuré pour recevoir le dispositif de ventilation (50, 150, 250) et pour être fixé à un ou plusieurs des cadres transversaux (6-10, 106-107, 206), dans laquelle l'adaptateur de dispositif de ventilation comprend une poutre de base (31, 131, 231) s'étendant substantiellement sur la longueur de cadre du cadre transversal respectif (6-10, 106-107, 206) ou entre deux cadres transversaux adjacents (6-10, 106-107, 206), dans laquelle la poutre de base (31, 131, 231) est pourvue d'au moins un passage (35, 135, 235) et le dispositif de ventilation (50, 150, 250) est en communication d'air avec ledit au moins un passage (35, 135, 235).

2. Serre horticole et/ou agricole selon la revendication 1, dans laquelle l'adaptateur de dispositif de ventilation est configuré pour être fixé à l'un des cadres transversaux (6-10, 106-107, 206), dans laquelle l'adaptateur de dispositif de ventilation s'étend substantiellement sur la longueur de cadre et substantiellement parallèlement au cadre respectif (6-10, 106-107, 206), dans laquelle l'adaptateur de dispositif de ventilation est disposé entre le cadre transversal respectif (6-10, 106-107, 206) et l'écran de toile (20).

3. Serre horticole et/ou agricole selon la revendication 1, dans laquelle l'adaptateur de dispositif de ventilation est configuré pour être fixé à deux cadres transversaux adjacents (6-10, 106-107, 206), dans laquelle l'adaptateur de dispositif de ventilation s'étend substantiellement transversalement par rapport aux deux cadres transversaux (6-10, 106-107, 206).

4. Serre horticole et/ou agricole selon la revendication 1, dans laquelle la poutre de base (31, 131, 231) est une poutre en forme de U, laquelle poutre en forme de U (31, 131, 231) comprend deux jambes parallèles (32, 33) reliées l'une à l'autre par une pièce centrale (34), de préférence dans laquelle ledit au moins un passage (35, 135, 235) est prévu dans la pièce centrale (34) de la poutre en forme de U (31, 131, 231), de préférence dans laquelle le dispositif de ventilation (50, 150, 250) est en communication d'air avec ledit au moins un passage (35, 135, 235) afin d'aspirer de l'air depuis l'espace de toit.

5. Serre horticole et/ou agricole selon l'une quelconque des revendications précédentes, dans laquelle le système de ventilation (30, 130, 230) comprend un tube d'aspiration (36, 136, 236) ayant une entrée d'air (37), une sortie d'air (38), et un canal d'air s'étendant entre l'entrée d'air (37) et la sortie d'air (38), et dans laquelle le dispositif de ventilation (50, 150, 250) comprend un ventilateur (65, 165, 265) connecté au tube d'aspiration (36, 136, 236) au niveau de sa sortie d'air (38) pour aspirer de l'air dans et à travers le tube d'aspiration (36, 136, 236), dans laquelle l'entrée d'air (37) du tube d'aspiration (36, 136, 236) est positionnée au niveau ou à proximité de l'adaptateur de dispositif de ventilation.

6. Serre horticole et/ou agricole selon la revendication 5, dans laquelle le tube d'aspiration (36, 136, 236) est connecté à l'adaptateur de dispositif de ventilation, de préférence dans laquelle le tube d'aspiration (36, 136, 236) est connecté à la poutre de base (31, 131, 231), de préférence à la pièce centrale (34) de la poutre en forme de U (31, 131, 231), de l'adaptateur de dispositif de ventilation, de façon que ledit au moins un passage (35, 135, 235) et l'entrée d'air (37) du tube d'aspiration (36, 136, 236) soient positionnés adjacents l'un à l'autre.

7. Serre horticole et/ou agricole selon l'une quelconque des revendications 5 à 6, dans laquelle le tube d'aspiration (36, 136, 236) converge depuis l'entrée d'air (37) jusqu'à la sortie d'air (38) dans une direction substantiellement parallèle à l'axe longitudinal de l'adaptateur de dispositif de ventilation, et/ou
dans laquelle le tube d'aspiration (36, 136, 236) converge depuis la sortie d'air (38) jusqu'à l'entrée d'air (37) dans une direction substantiellement transversale par rapport à l'axe longitudinal de l'adaptateur de dispositif de ventilation.

8. Serre horticole et/ou agricole selon l'une quelconque des revendications précédentes, lorsqu'elle dépend de la revendication 5, dans laquelle le ventilateur (65, 165, 265) comprend un caisson de ventilateur (66) connecté au tube d'aspiration (36, 136, 236) au niveau de la sortie d'air (38) de ce dernier, un arbre de rotation disposé de manière à pouvoir tourner à l'intérieur du caisson de ventilateur (66), et un certain nombre de pales de ventilateur fixées à l'arbre de rotation et s'étendant radialement à partir de l'arbre de rotation, de préférence dans laquelle le dispositif de ventilation (50, 150, 250) comprend un mélangeur d'air (60, 160, 260) situé entre la sortie d'air (38) du tube d'aspiration (36, 136, 236) et le ventilateur (65, 165, 265), dans laquelle le mélangeur d'air (60, 160, 260) est configuré pour fournir au ventilateur (65, 165, 265) un mélange d'air provenant de l'espace de toit et/ou de l'espace de culture, de préférence dans lequel le mélangeur d'air (260) comprend un caisson de mélangeur ayant une première entrée d'air (285) pour la connexion avec la sortie d'air du tube d'aspiration (236), une deuxième entrée d'air (286) pour permettre à de l'air provenant de l'espace de culture d'entrer dans le mélangeur d'air (260), une sortie d'air (281) pour permettre à de l'air de sortir du mélangeur d'air (260), et un canal d'air s'étendant entre la première entrée d'air (285), la deuxième entrée d'air (286) et la sortie d'air (281).

9. Serre horticole et/ou agricole selon l'une quelconque des revendications précédentes, dans laquelle le système de ventilation (230) est pourvu d'un échangeur de chaleur (280) agencé pour échanger de l'énergie thermique avec l'air déplacé à l'intérieur de l'espace de culture et/ou entre l'espace de toit et l'espace de culture.

10. Serre horticole et/ou agricole selon les revendications 8 et 9, dans laquelle le ventilateur (265) est disposé au niveau ou à proximité de la sortie d'air (287) du mélangeur d'air (260), et l'échangeur de chaleur (280) est disposé au niveau ou à proximité de la première entrée d'air (285) du mélangeur d'air (260), au niveau ou à proximité de la deuxième entrée d'air (286) du mélangeur d'air (260), au niveau ou à proximité de la sortie d'air (281 ) du mélangeur d'air (260) en amont du ventilateur (265), et/ou en aval du ventilateur (265).

11. Serre horticole et/ou agricole selon l'une quelconque des revendications précédentes, dans laquelle l'adaptateur de dispositif de ventilation comprend une poutre supplémentaire (170, 270) disposée en dessous et substantiellement parallèle à la poutre de base (131, 231), dans laquelle la poutre supplémentaire (170, 270) est configurée pour permettre qu'un second écran soit fixé sur elle.

12. Serre horticole et/ou agricole selon l'une quelconque des revendications précédentes, dans laquelle la serre (1, 100, 200) comprend de multiples dispositifs de ventilation (50, 150, 250), et dans laquelle l'adaptateur de dispositif de ventilation est configuré pour recevoir les multiples dispositifs de ventilation (50, 150, 250), et/ou
dans laquelle la serre (1, 100, 200) comprend de multiples adaptateurs de dispositif de ventilation, chacun étant configuré pour recevoir au moins un dispositif de ventilation (50, 150, 250).

13. Système de ventilation conçu pour être utilisé comme système de ventilation dans la serre horticole et/ou agricole selon l'une quelconque des revendications précédentes.

14. Adaptateur de dispositif de ventilation conçu pour être utilisé comme adaptateur de dispositif de ventilation dans la serre horticole et/ou agricole selon l'une quelconque des revendications 1 à 12, ou conçu pour être utilisé en tant qu'adaptateur de dispositif de ventilation dans le système de ventilation selon la revendication 13.

15. Procédé de climatisation d'un espace de culture dans une serre horticole et/ou agricole, de préférence une serre horticole et/ou agricole selon l'une quelconque des revendications 1 à 12, le procédé comprenant les étapes suivantes: par le dispositif de ventilation (50, 150, 250), déplacer de l'air à l'intérieur de l'espace de culture; par le dispositif de ventilation (50, 150, 250), déplacer de l'air entre l'espace de toit et l'espace de culture; ou par le dispositif de ventilation (50, 150, 250), déplacer de l'air à l'intérieur de l'espace de culture et entre l'espace de toit et l'espace de culture.
